# EUROPEAN PATENT SPECIFICATION

(11) **EP 3 690 588 B1**
(45) Date of publication and mention of the grant of the patent: **17.05.2023**
(21) Application number: 18861713.8
(22) Date of filing: 18.06.2018
(51) Int. Cl.: G05D 1/02, B25J 5/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF ET PROCÉDÉ DE TRAITEMENT D'INFORMATIONS, ET PROGRAMME

(30) Priority: 26.09.2017 JP 2017184564
(43) Date of publication of application: 05.08.2020
(73) Proprietor: Sony Group Corporation, Tokyo 108-0075 (JP)
(72) Inventor: YAMAGUCHI, Takamori, Tokyo 108-0075 (JP)
(74) Representative: D Young & Co LLP
(86) International application number: PCT/JP2018/023149
(87) International publication number: WO 2019/064730

(56) References cited:
- JP-A- 2004 114 285
- JP-A- 2006 110 707
- JP-A- 2006 298 562
- JP-A- 2010 231 808

## Description

### TECHNICAL FIELD

The present disclosure relates to an information processing apparatus, an information processing method, and a program.

### BACKGROUND ART

Conventionally, for example, various robots that autonomously make a motion by recognizing the situation of the outside world have been proposed.

For example, Patent Document 1 below describes that a robot apparatus has a plurality of action modules configured in a tree structure format, and then a higher-level action module among the plurality of action modules controls one or more action modules connected to the higher-level action module, on the basis of a control policy stored in a storage part.

### CITATION LIST

### PATENT DOCUMENT

Patent Document 1: Japanese Patent No. 4449372

JP 2010-231808 A aims to provide a program change method and a computer program for flexibly responding to various request specifications, shortening a development process by improving reusability of each program, and reducing development load, and discloses that each function to be achieved in an application layer and a platform layer is achieved by configuring a function framework as a pair of components for achieving detail functions associated with attributes such as functions or roles. A plurality of pieces of attribute information may be included. When the function framework is configured, the function framework corresponding to various specifications may be configured according to the ways of selection of the attribute information.

JP 2006-298562 A aims to provide a control method for a conveying system, achieving efficient conveyance of lots, and provides a conveying system with a ceiling track traveling rail for automatically conveying lots, a plurality of conveying trucks transferring the lots and traveling on the rail, a plurality of automatic storing cabinets storing lots which can be processed in production equipment, and buffer shelves positioned in front of the production equipment and storing the lots to be processed next. The conveying system includes a delivery time control process of controlling delivery time of the lots and determining the priority of the lots in accordance with delivery time of order; a production progress control process of defining the production equipment that can process the lots and the automatic storing cabinets that are conveying destinations of the lots and performing overall control of production progress; a product allocating process of determining the order of the production equipment to which the lots are allocated in accordance with the state of the production equipment and allocating the optimal lots to be processed next to the production equipment; a conveyance control process of issuing conveyance instruction to the automatic storing cabinets which were determined as conveyance destinations in the production progress control process; and a production equipment control process of controlling processing of the production equipment may be configured according to the ways of selection of the attribute information.

### SUMMARY OF THE INVENTION

### PROBLEMS TO BE SOLVED BY THE INVENTION

However, the technology described in Patent Document 1 does not consider changing the state of an action module when the action module performs processing.

Therefore, the present disclosure proposes new and enhanced information processing apparatus, information processing method, and program capable of planning an action while appropriately changing a state.

### SOLUTIONS TO PROBLEMS

The invention is set out in the appended set of claims. According to the present disclosure, an information processing apparatus is provided, the information processing apparatus including a first planning unit that performs predetermined processing relating to planning of an action while changing a state between a plurality of types of predetermined states, in which, in a case where the state has been changed, the first planning unit notifies a second planning unit at a higher level than the first planning unit of information indicating that the state has been changed, and the plurality of types of predetermined states includes a plurality of types of first states indicating that normal execution is in progress.

Furthermore, according to the present disclosure, an information processing method is provided, the information processing method including: performing, by a processor, predetermined processing relating to planning of an action while changing a state between a plurality of types of predetermined states; and, in a case where the state has been changed, notifying a second planning unit at a higher level of information indicating that the state has been changed, in which the plurality of types of predetermined states includes a plurality of types of first states indicating that normal execution is in progress.

In addition, according to the present disclosure, a program is provided, the program causing a computer to function as a first planning unit that performs predetermined processing relating to planning of an action while changing a state between a plurality of types of predetermined states, in which, in a case where the state has been changed, the first planning unit notifies a second planning unit at a higher level than the first planning unit of information indicating that the state has been changed, and the plurality of types of predetermined states includes a plurality of types of first states indicating that normal execution is in progress.

### EFFECTS OF THE INVENTION

As described above, according to the present disclosure, it is possible to plan an action while appropriately changing the state. Note that the effects described herein are not necessarily limited and any effects described in the present disclosure may be applied.

### BRIEF DESCRIPTION OF DRAWINGS

Fig. 1 is an explanatory diagram illustrating a configuration example of an information processing system common to each embodiment of the present disclosure.
Fig. 2 is a diagram illustrating an example of the overall configuration of an action planning module of a certain robot.
Fig. 3 is a block diagram illustrating a functional configuration example of a robot 10 according to a first embodiment.
Fig. 4 is a block diagram illustrating a configuration example of an action planning unit 100 according to the first embodiment.
Fig. 5 is a diagram illustrating an example of states held by a certain planning unit, which correspond to respective planning units at higher level than the certain planning unit.
Fig. 6 is a diagram (state transition diagram) illustrating an example of a flow in which a state held in each server of each planning unit is changed between a plurality of types of predetermined states.
Fig. 7 is a diagram illustrating an example of information transmitted and received between a higher-level planning unit and a lower-level planning unit.
Fig. 8 is a diagram illustrating an example of a branch structure and an aggregation structure that can be fulfilled in the action planning unit 100.
Fig. 9 is a diagram illustrating an example of the change of the state of each planning unit when a planning unit X and a planning unit Y illustrated in Fig. 8 are caused to execute processing in sequence.
Fig. 10 is a block diagram illustrating a detailed functional configuration example of a planning unit 104.
Fig. 11 is a flowchart illustrating a part of the flow of processing according to the first embodiment.
Fig. 12 is a flowchart illustrating a part of the flow of processing according to the first embodiment.
Fig. 13 is a diagram illustrating an output example of information indicating that the state has been changed to a storage unit 164 by each planning unit according to a second embodiment.
Fig. 14 is a diagram illustrating a flow until a trace screen is displayed on the basis of motion history information according to the second embodiment.
Fig. 15 is a diagram illustrating a display example of the trace screen.
Fig. 16 is a diagram illustrating a display example of a detailed screen regarding a partial area in the trace screen illustrated in Fig. 15.
Fig. 17 is a flowchart illustrating a part of the flow of processing according to the second embodiment.
Fig. 18 is a flowchart illustrating a part of the flow of processing according to the second embodiment.

### MODE FOR CARRYING OUT THE INVENTION

Hereinafter, favorable embodiments of the present disclosure will be described in detail with reference to the accompanying drawings. Note that, in the present description and the drawings, constituent elements having substantially the same functional configuration will be denoted by the same reference numeral and redundant description will be omitted.

Furthermore, in the present description and the drawings, there are also cases where a plurality of constituent elements having substantially the same functional configuration is distinguished by attaching different alphabets after the same reference numeral. For example, a plurality of constituent elements having substantially the same functional configuration is distinguished as a planning unit 102a and a planning unit 102b as necessary. However, in a case where it is not necessary to particularly distinguish each of a plurality of constituent elements having substantially the same functional configuration, only the same reference numeral is attached. For example, in a case where it is not necessary to particularly distinguish between the planning unit 102a and the planning unit 102b, the planning unit 102a and the planning unit 102b are simply referred to as the planning units 102.

In addition, the "modes for carrying out the invention" will be described in accordance with the following item order.
1. Overview
2. First Embodiment
3. Second Embodiment
4. Variations

### <<1. Overview>>

First, an overview of the present disclosure will be described. Usually, an autonomous mobile apparatus such as an autonomous robot has an action planning function (an action planning module). Moreover, in this action planning module, a plurality of algorithms having different execution cycles is often configured to form a hierarchical structure (for example, a tree structure).

### <1-1. Overview of Action Planning Module>

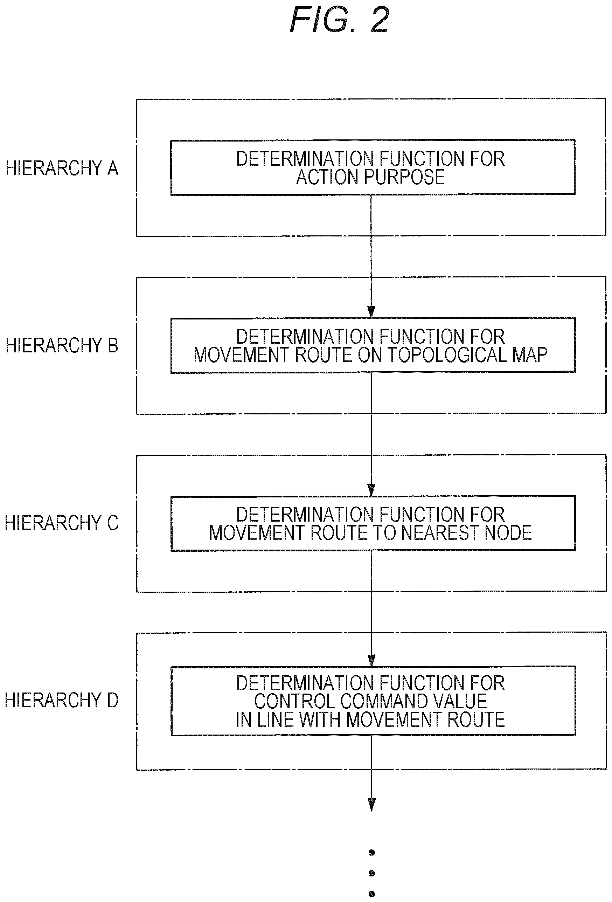

Fig. 2 is a diagram illustrating an example of the overall configuration of an action planning module of a certain robot. As illustrated in Fig. 2, this action planning module of the robot is configured such that a plurality of algorithms (planning modules) having different execution cycles forms a hierarchical structure. Specifically, the action planning module is configured such that the function at the top of the hierarchy has a "determination function for action purpose", the function at the second place of the hierarchy has a "determination function for movement route on topological map", the function at the third place of the hierarchy has a "determination function for movement route to nearest node", and then the function at the fourth place of the hierarchy has a "determination function for control command value in line with movement route". Then, in this action planning module, each planning module controls the execution of a planning module located in the immediate lower hierarchy.

Here, the contents of each of the above planning modules will be described more specifically. First, in the "determination function for action purpose", for example, the robot selects a movement mode on the basis of human operation information acquired via a communication network 22 described later, and then determines a destination on the basis of the operation information. The cycle of this "determination function for action purpose" can be a cycle of human operation.

In the "determination function for movement route on topological map", for example, the robot first "plans a movement route and a movement method" on the basis of information regarding the destination determined by the "determination function for action purpose", and a topological map and information regarding the self-location on the topological map obtained from the result of situation recognition performed by the robot. Then, the robot executes the planned movement method. The cycle of this "determination function for movement route on topological map" can be a cycle of human operation or a cycle of change of the topological map.

In the "determination function for movement route to nearest node", for example, the robot first generates information regarding the movement route to the destination by a graph search algorithm such as an A* (A-star) search algorithm, using an occupied grid map and the self-location obtained from the result of the above-mentioned situation recognition. Then, the robot merges the generated pieces of information regarding individual movement routes. The cycle of this "determination function for movement route to nearest node" can be about several Hz (for example, 1 Hz).

In the "determination function for control command value in line with movement route", for example, the robot determines the control command values (for example, the traveling direction and the traveling speed) such that the control command values are in line with the merged movement route (by the "determination function for movement route to nearest node"), using the self-location, self-posture, self-speed, and the like obtained from the result of the above-mentioned situation recognition. The cycle of this "determination function for control command value in line with movement route" can be about several Hz (for example, 5 Hz).

### <1-2. Organization of Problems>

Incidentally, it is conventionally desired to improve the development efficiency of software such as the action planning module.

In general, an action planning algorithm for a particular robot is often applicable to other types of robots. For example, a part of an action planning algorithm for an automated driving car can be the same as the algorithm of an indoor movement robot (for example, a service robot). In this manner, there are many cases where algorithms are applicable between different types of robots. Therefore, it is desirable that an algorithm developed exclusively for a certain robot be applicable to other types of robots having different hierarchical structures.

Accordingly, each embodiment of the present disclosure has been created by focusing on the above circumstances. According to each embodiment, it is possible to provide a software framework that enables sharing of algorithm implementation that fulfills an action plan of a robot, even with a robot having a different use case. Consequently, software development efficiency can be improved.

### <1-3. Configuration of Information Processing System>

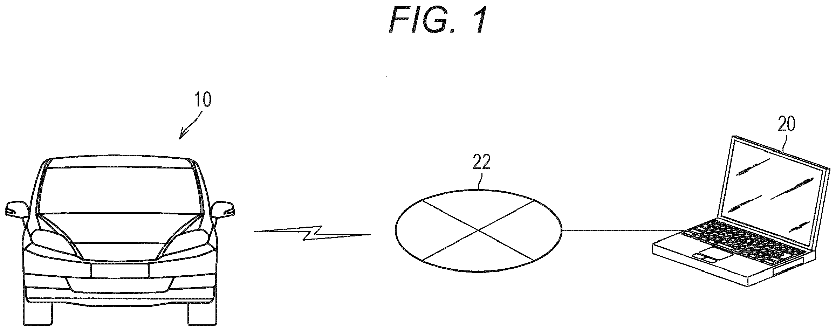

Next, a configuration example of an information processing system common to each embodiment of the present disclosure will be described with reference to Fig. 1. As illustrated in Fig. 1, the information processing system according to each embodiment includes a robot 10, a terminal 20, and the communication network 22.

### {1-3-1. Robot 10}

The robot 10 is an example of an information processing apparatus according to the present disclosure. The robot 10 can be an apparatus capable of autonomously acting (for example, moving) using an electrical and/or magnetic influence. For example, the robot 10 may be able to execute a function similar to the function of the action planning module described above with reference to Fig. 2.

Although Fig. 1 illustrates an example in which the robot 10 is a car (such as an automated driving car), the present disclosure is not limited to such an example. For example, the robot 10 may be a robot for indoor movement, a humanoid autonomous control robot, a quadruped walking robot, a drone, an industrial robot (for example, an assembly robot for a machine or the like), a service robot (for example, a medical robot such as a surgical robot, and a cooking robot), or a toy. Furthermore, the automated driving car is not limited to a four-wheeled car, and may be a two-wheeled car or a three-wheeled car.

### {1-3-2. Terminal 20}

The terminal 20 is an information processing terminal used by a user such as a developer of the robot 10, for example. The terminal 20 includes, for example, a control unit including a processing circuit (such as a central processing unit (CPU)), an input unit for a user to operate (for example, a mouse and a keyboard), a display unit that displays a display screen (for example, a liquid crystal display (LCD) or an organic light emitting diode (OLED)), and a communication unit that communicates with another apparatus via the communication network 22.

For example, the terminal 20 accepts input of user operation information (for example, designation of a destination) regarding the action of the robot 10, and then transmits the input operation information to the robot 10 via the communication network 22. Furthermore, the developer of the robot 10 can use the terminal 20 to develop software that can be implemented in the robot 10, for example.

### {1-3-3. Communication Network 22}

The communication network 22 is a wired or wireless transfer path for information transmitted from an apparatus connected to the communication network 22. For example, the communication network 22 may include a public line network such as a telephone line network, the Internet, and a satellite communication network, various local area networks (LANs) including Ethernet (registered trademark), and a wide area network (WAN). Furthermore, the communication network 22 may include a dedicated line network such as an Internet protocol-virtual private network (IP-VPN).

### <<2. First Embodiment>>

The configuration of the information processing system common to each embodiment has been described above. Next, the content of the first embodiment according to the present disclosure will be described.

### <2-1. Configuration>

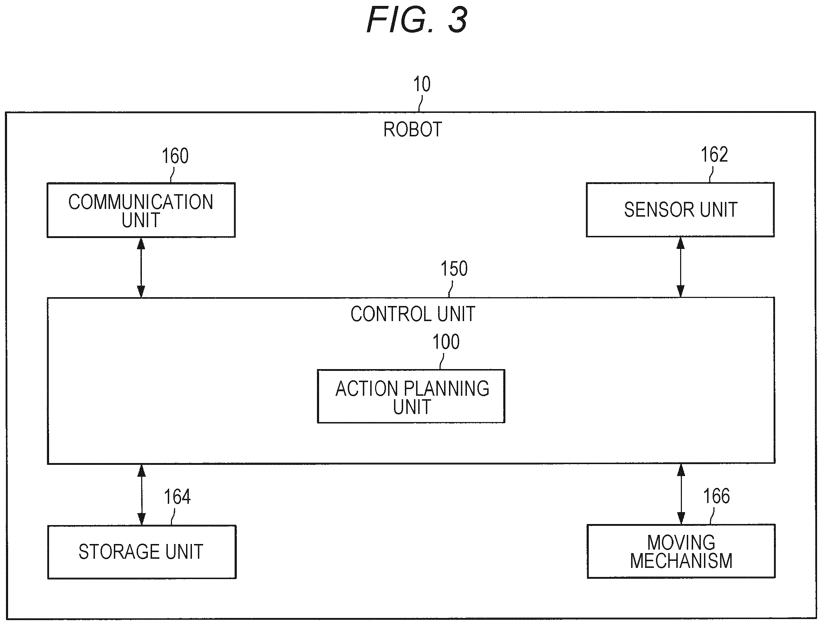

First, the functional configuration of the robot 10 according to the first embodiment will be described. Fig. 3 is a block diagram illustrating a functional configuration example of the robot 10 according to the first embodiment. As illustrated in Fig. 3, the robot 10 includes a control unit 150, a communication unit 160, a sensor unit 162, a storage unit 164, and a moving mechanism 166.

### {2-1-1. Control Unit 150}

The control unit 150 uses, for example, a processing circuit such as a central processing unit (CPU) or a graphics processing unit (GPU) and a memory such as a read only memory (ROM) or a random access memory (RAM) to comprehensively control the motion of the robot 10. For example, the control unit 150 performs situation understanding (for example, understanding of information regarding the outside world, the motion state of the robot 10, and the like) and action planning on the basis of a sensing result by the sensor unit 162, and the like. Then, the control unit 150 moves to the destination by controlling the moving mechanism 166 on the basis of results of these understanding and planning.

Furthermore, as illustrated in Fig. 3, the control unit 150 includes an action planning unit 100.

### {2-1-2. Action Planning Unit 100}

The action planning unit 100 plans the action of the robot 10 on the basis of, for example, sensing results (an image, a sound, position information, and the like) by the sensor unit 162, the user operation information received by the communication unit 160, and the like.

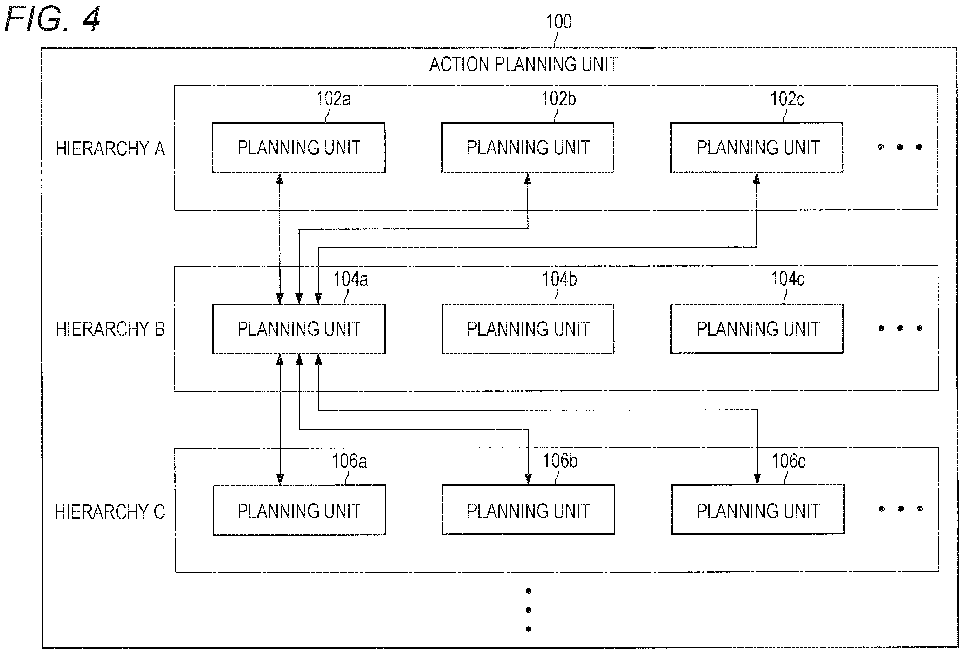

Fig. 4 is a block diagram illustrating a configuration example of the action planning unit 100. As illustrated in Fig. 4, the action planning unit 100 includes a plurality of planning units, and besides the plurality of planning units is configured to form an N-layer hierarchical structure. Here, N can be an arbitrary number equal to or greater than two. For example, the action planning unit 100 includes one or more planning units 102 having the highest hierarchical order (hereinafter sometimes referred to as "planning units 102 in a hierarchy A"), one or more planning units 104 having the second highest hierarchical order (hereinafter sometimes referred to as "planning units 104 in a hierarchy B"), and one or more planning units 106 having the third highest hierarchical order (hereinafter sometimes referred to as "planning units 106 in a hierarchy C") .

Moreover, every single one of the planning units can be configured so as to be capable of communicating with each of one or more planning units located in a hierarchy one level higher than the one of the planning units and one or more planning units located in a hierarchy one level lower than the one of the planning units. For example, as illustrated in Fig. 4, the planning unit 104a in the hierarchy B is configured so as to be able to communicate with all of the respective "planning units 102 in the hierarchy A" and all of the respective "planning units 106 in the hierarchy C".

### (2-1-2-1. Execution of Processing)

Each planning unit performs predetermined processing relating to planning of the action of the robot 10 while changing the state between a plurality of types of predetermined states. For example, every one planning unit performs processing defined for the one planning unit in advance regarding planning of the action of the robot 10. Here, every one planning unit can be defined in advance, for example, by the developer so as to perform processing of which the type is different for each hierarchy in which the one planning unit is located. Note that individual planning units located in the same hierarchy may be defined in advance so as to perform different types of processing from each other, or may be defined in advance so as to each perform processing of the same type.

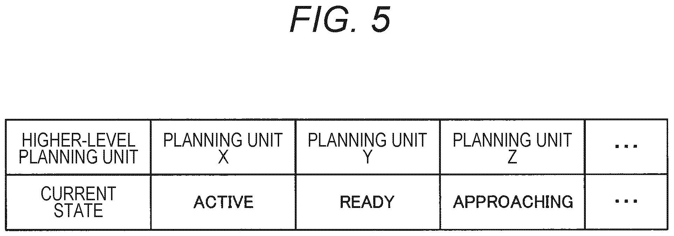

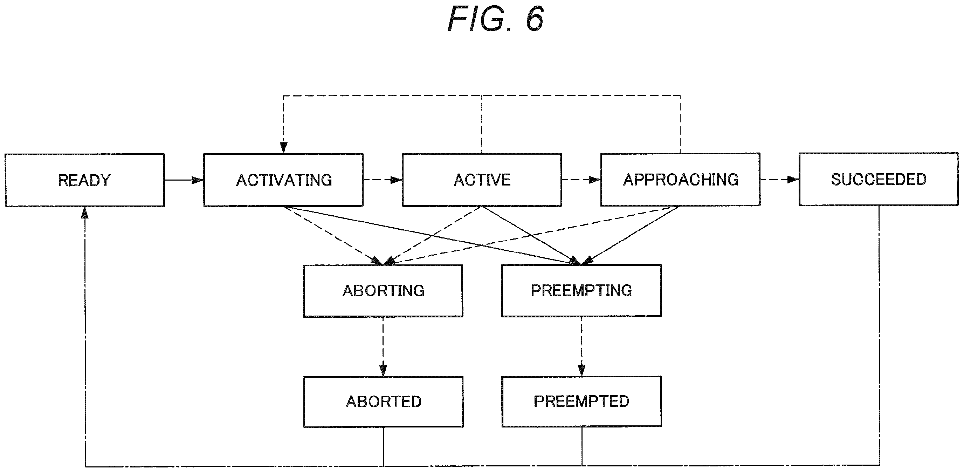

Moreover, as illustrated in Fig. 5, for example, every one planning unit can hold states corresponding to all of the respective planning units located in a hierarchy one level higher than the one planning unit, where the number of the states is the same as the number of all these higher-level planning units. Then, each planning unit can change each of (current) states corresponding to all of these respective higher-level planning units between the plurality of types of predetermined states. For example, as will be described later with reference to Fig. 6, for all of the respective higher-level planning units, each planning unit changes a current state corresponding to each of these higher-level planning units, to any other state associated with the current state, among the plurality of types of predetermined states. As an example, for all of the respective higher-level planning units, each planning unit uses a function for changing a current state corresponding to each of these higher-level planning units to any other state associated with the current state, among the plurality of types of predetermined states, to change the current state to the any other state.

The plurality of types of predetermined states can include a plurality of types of first states indicating that normal execution is in progress, and a plurality of types of second states different from the first states. Here, the plurality of types of first states each may be defined so as to represent mutually different degrees of progress of processing corresponding to the relevant planning unit. For example, as illustrated in Fig. 6, the first states of the plurality of types are ACTIVATING, ACTIVE, and APPROACHING, and besides the order of ACTIVATING, ACTIVE, and APPROACHING may be defined as an order in which lower progress of processing is placed earlier. As an example, ACTIVATING is a state indicating that processing corresponding to the relevant planning unit is being prepared. ACTIVE is a state in which the above processing is being executed normally and the degree of progress of this processing is less than a predetermined threshold. APPROACHING is a state in which the above processing is being executed normally and the degree of progress of this processing is equal to or greater than the predetermined threshold (that is, a state in which the processing corresponding to the relevant planning unit is approaching the end).

Furthermore, as illustrated in Fig. 6, the plurality of types of the second states includes, for example, a state in which the execution of the processing is standing by (READY), a state in which the processing has ended normally (that is, a state in which the degree of progress of the processing has reached 100%) (SUCCEEDED), a state in which the processing is ending abnormally (ABORTING), a state in which the processing has ended abnormally (ABORTED), a state in which the processing is being interrupted (PREEMPTING), and a state in which the processing has been interrupted (PREEMPTED).

### - Instruction from Higher Level

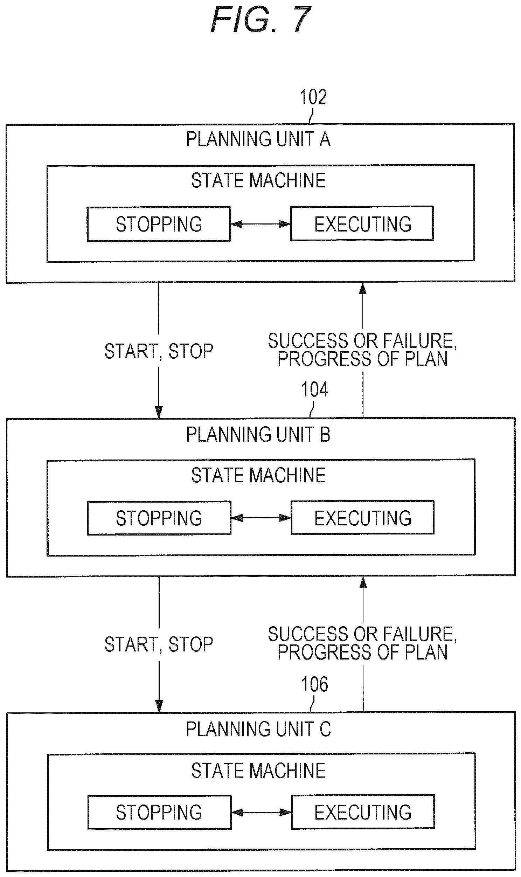

In the following, the contents of processing executed by each planning unit mentioned above will be described in more detail. For example, every one planning unit performs processing (planning processing) corresponding to the one planning unit on the basis of control information received from one of the planning units located in a hierarchy one level higher than the one planning unit. Here, the above control information may include information instructing the start or stop or the like of the processing corresponding to the one planning unit. For example, as illustrated in Fig. 7, a planning unit B104 can receive control information for instructing the start of processing from a higher-level planning unit A102. In this case, the planning unit B104 can start the execution of the processing corresponding to the planning unit B104, while changing a current state corresponding to the planning unit A102 held by the planning unit B104 from READY to ACTIVATING in accordance with the received control information.

Furthermore, as illustrated in Fig. 7, the planning unit B104 can receive control information for instructing the stop of the processing from the planning unit A102. In this case, the planning unit B104 can stop (interrupt) the currently executing processing corresponding to the planning unit B104 in accordance with the received control information. In this case, the planning unit B104 can stop the execution of the processing corresponding to the planning unit B104, while changing a current state corresponding to the planning unit A102 (any one of ACTIVATING, ACTIVE, and APPROACHING), which is held by the planning unit B104, to PREEMPTING.

Alternatively, the received control information may include information instructing to change a current state corresponding to the relevant higher-level planning unit between the plurality of types of predetermined states. For example, information instructing a change destination state among one or more other predetermined states associated with the current state corresponding to the relevant higher-level planning unit may be included. As an example, in a case where the current state corresponding to the relevant higher-level planning unit is "ACTIVE", the control information may include an instruction to change the state to "PREEMPTING".

### - Notification from Lower Level

Moreover, every one planning unit performs processing corresponding to the one planning unit on the basis of information received from one of the planning units located in a hierarchy one level lower than the one planning unit and the setting (implementation) of the one planning unit. For example, as illustrated in Fig. 7, every one planning unit can receive, from one of the planning units located in a hierarchy one level lower than the one planning unit, information indicating that the state of the one of the planning units has been changed to another state. Alternatively, every one planning unit can receive information indicating the progress of processing corresponding to the one of the planning units (for example, completion or failure of the processing). In this case, every one planning unit can perform processing corresponding to these pieces of received information and the setting of the one planning unit.

### - Combination of States

Moreover, every one planning unit performs processing corresponding to the one planning unit on the basis of the current state of the one planning unit and the setting of the one planning unit. As described above, every one planning unit can hold states corresponding to all of the respective planning units located in a hierarchy one level higher than the one planning unit. In this case, every one planning unit can execute processing (of the one planning unit) associated in advance with a combination of current states corresponding to all of the respective higher-level planning units.

### (2-1-2-2. Notification to Higher-Level Planning Unit)

Moreover, in a case where the state has been changed, every one planning unit notifies another planning unit located in a hierarchy one level higher than the one planning unit of information indicating that the state has been changed. For example, each time any one planning unit changes a state corresponding to one of the planning units located in a hierarchy one level higher than the any one planning unit, the any one planning unit notifies only the one of the higher-level planning units sequentially of information indicating that the state corresponding to the one of the higher-level planning units has been changed, with respect to all of the higher-level respective planning units. Here, "the information indicating that the state corresponding to the one of the higher-level planning units has been changed" includes, for example, identification information regarding a state before the change corresponding to the one of the higher-level planning units and identification information regarding a state after the change corresponding to the one of the higher-level planning units.

Moreover, for example, as illustrated in Fig. 7, every one planning unit can notify one or more planning units located in a hierarchy one level higher than the one planning unit of information indicating the progress of processing corresponding to the one planning unit (for example, completion or failure of the processing) on the basis of the setting of the one planning unit.

### (2-1-2-3. Control of Lower-Level Planning Unit)

Moreover, as illustrated in Fig. 7, every one planning unit can also control another planning unit located in a hierarchy one level lower than the one planning unit to execute processing corresponding to the another planning unit, on the basis of the setting of the one planning unit. For example, every one planning unit may notify another planning unit located in a hierarchy one level lower than the one planning unit of control information for instructing the start or stop or the like of processing corresponding to the another planning unit, on the basis of the degree of progress of processing of the one planning unit. Alternatively, every one planning unit may notify the lower-level planning unit of the control information, on the basis of a combination of current states corresponding to all of the respective planning units located in a hierarchy one level higher than the one planning unit, which are held in the one planning unit.

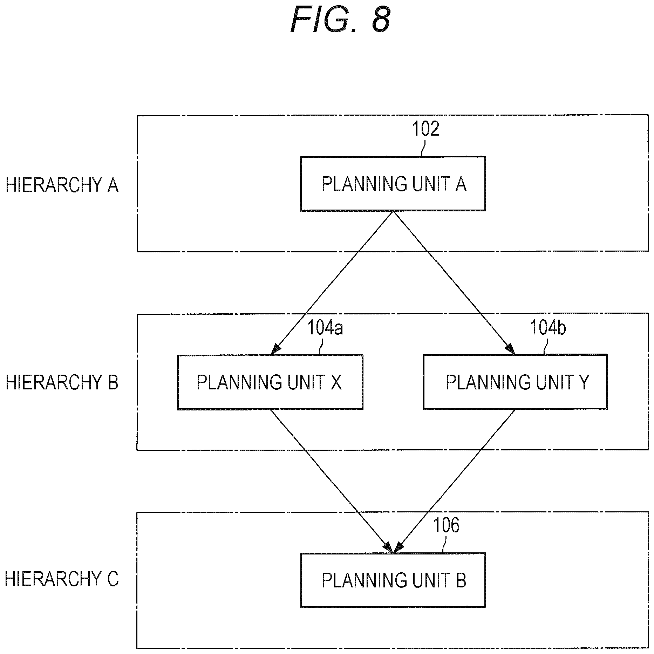

Thus, in the first embodiment, the connection method for each planning unit, the rule of state transition of each planning unit, and the control method for each planning unit are basically made common. For this reason, the action planning unit 100 can take an arbitrary hierarchical structure. For example, as illustrated in Fig. 8, the action planning unit 100 is allowed to include a branch structure or an aggregation structure. In the example illustrated in Fig. 8, a structure for allowing the planning unit A102 to control in parallel each of a planning unit X104a and a planning unit Y104b located in a hierarchy one level lower than the planning unit A102 (that is, a branch structure) is configured. Moreover, in the example illustrated in Fig. 8, a structure for allowing each of a plurality of planning units (specifically, the planning unit X104a and the planning unit Y104b) located in the same hierarchy to independently control one planning unit 106 located in a hierarchy one level lower than the plurality of planning units (that is, an aggregation structure) is configured. As described above, the first embodiment can provide a software framework in which a standard interface between respective planning units is specified such that an arbitrary hierarchical structure that can be assumed in various autonomous apparatuses (such as various robots) can be fulfilled.

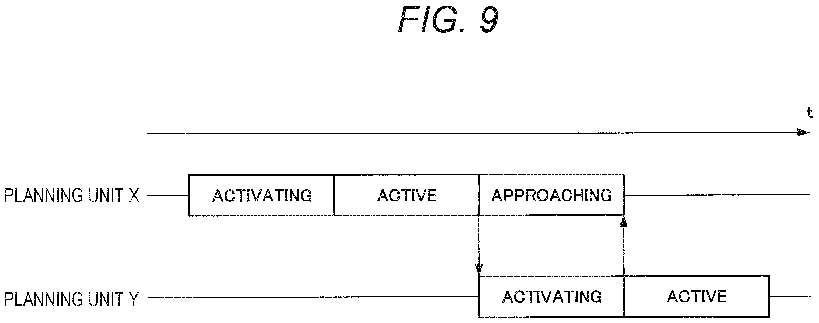

For example, owing to that the "branch structure" as illustrated in Fig. 8 is configured, in a scene where a plurality of the planning units 104 is caused to execute processing in sequence as illustrated in Fig. 9, it is possible to eliminate (or greatly reduce) the time required for switching when switching between processing tasks by the respective planning units 104. More specifically, as illustrated in Fig. 9, the planning unit A102 illustrated in Fig. 8 can allow the planning unit Y104b to perform warm air operation by switching the state of the planning unit Y104b to "ACTIVATING" (from "READY") at a timing when the state of the planning unit X104a varies from "ACTIVE" to "APPROACHING". In this manner, the execution of the two planning units 104 can be switched smoothly (efficiently).

### - Variations

Additionally, or alternatively, every one planning unit can also notify another planning unit located in a hierarchy one level lower than the one planning unit of control information for changing the state of the another planning unit to another state, on the basis of the setting of the one planning unit.

### (2-1-2-4. Detailed Functional Configuration Example of Each Planning Unit)

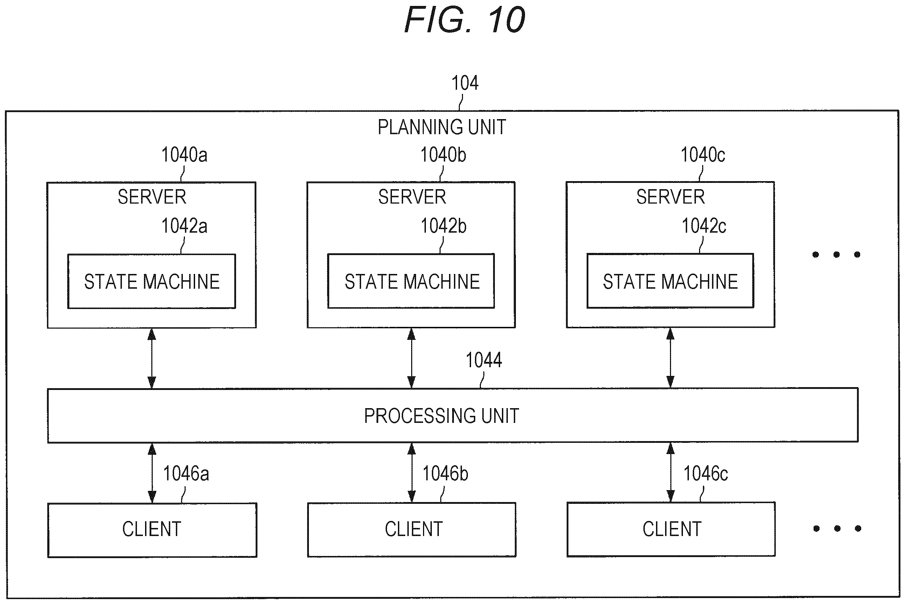

Here, a more detailed functional configuration example of each planning unit will be described with reference to Fig. 10. Fig. 10 is a block diagram illustrating a detailed functional configuration example of the planning unit 104. As illustrated in Fig. 10, the configuration of the planning unit 104 can include N servers 1040, a processing unit 1044, and N clients 1046. Here, N is a number equal to or greater than two defined in advance. Note that, in Fig. 10, although the configuration example of the planning unit 104 is illustrated as an example, other planning units located in other hierarchies (for example, the planning unit 102 and the planning unit 106) can be configured similarly to the configuration example illustrated in Fig. 10.

### - Server 1040

Each server 1040 has a function of communicating with one of the planning units 102 located in a hierarchy one level higher than the planning unit 104. For example, all of the respective planning units 102 located in a hierarchy one level higher than the planning unit 104 are each associated with distinct servers 1040 on a one-to-one basis. Then, every one server 1040 communicates only with the planning unit 102 associated with the one server 1040 (among all of the planning units 102). According to such a configuration, the planning unit 104 can communicate with all of the planning units 102 located in a hierarchy one level higher than the planning unit 104.

### -- Change of State

Moreover, each server 1040 includes a state machine 1042. The state machine 1042 holds a state corresponding to the higher-level planning unit 102 associated with the server 1040 (including this state machine 1042). With this configuration, the planning unit 104 can hold states corresponding to all of the respective planning units 102 located in a hierarchy one level higher than the planning unit 104, as illustrated in Fig. 5. In the example illustrated in Fig. 5, the state machine 1042a in the server 1040a associated with the "planning unit X" 102a holds "ACTIVE" as a current state corresponding to the "planning unit X" 102a.

Moreover, the state machine 1042 in each server 1040 changes the held state between the above-described plurality of types of predetermined states as illustrated in Fig. 6, for example.

Fig. 6 is a diagram (state transition diagram) illustrating an example of a flow in which a state held by each state machine 1042 is changed (state transition) between the plurality of types of predetermined states. Note that, in Fig. 6, a solid line indicates a case where the change of the state occurs in response to an instruction (request) from the higher-level planning unit 102. Furthermore, a broken line indicates a case where the change of the state occurs in response to a request from the processing unit 1044, which will be described later. In addition, a dashed-dotted line indicates a case where the state is changed automatically. In the example illustrated in Fig. 6, in a case where a current state held by a certain state machine 1042 is "READY", the state is changed only in response to an instruction from the higher-level planning unit 102, and besides the state after the change is assigned as "ACTIVATING". In this manner, in the first embodiment, the individual state machines 1042 included in the respective planning units all perform state transitions in the same flow. Consequently, the action planning unit 100 can take an arbitrary hierarchical structure.

### -- Notification of Change of State

Moreover, each time any one server 1040 changes the state held by the state machine 1042 in the any one server 1040, the any one server 1040 notifies the higher-level planning unit 102 associated with the any one server 1040 of information (also referred to as a message) indicating that the state has been changed (as described earlier). Furthermore, for example, each time any one server 1040 changes the state held by the state machine 1042 in the any one server 1040, the any one server 1040 notifies the processing unit 1044 described later of information indicating that the state has been changed (for example, identification information regarding the any one server 1040 and identification information regarding a state after the change).

### -- Notification of Progress of Processing

Moreover, every one server 1040 notifies the higher-level planning unit 102 associated with the one server 1040 of information indicating the progress of processing by the processing unit 1044, on the basis of a request from the processing unit 1044, for example. Here, the information indicating the progress of the processing can indicate the degree of progress of the processing or, for example, can indicate that an event has happened from among various events defined in advance (for example, an event corresponding to the completion of the processing or an event corresponding to the failure of the processing).

### - Client 1046

Each client 1046 has a function of communicating with one of the planning units 106 located in a hierarchy one level lower than the planning unit 104. For example, all of the respective planning units 106 located in a hierarchy one level lower than the planning unit 104 are each associated with distinct clients 1046 on a one-to-one basis. Then, every one client 1046 communicates only with the planning unit 106 associated with the one client 1046 (among all of the planning units 106). According to such a configuration, the planning unit 104 can communicate with all of the planning units 106 located in a hierarchy one level lower than the planning unit 104.

For example, every one client 1046 notifies the planning unit 106 associated with the one client 1046 of control information for instructing the start or stop or the like of processing corresponding to the associated planning unit 106, on the basis of a request acquired from the processing unit 1044 described later. Furthermore, every one client 1046 receives, from the planning unit 106 associated with the one client 1046, information indicating that the state of the associated planning unit 106 has been changed (in more detail, information indicating that a state corresponding to the relevant planning unit 104 has been changed in the associated planning unit 106).

### - Processing Unit 1044

The processing unit 1044 executes a function defined in advance for the relevant planning unit 104 (an implemented function) by the developer regarding planning of the action of the robot 10. For example, the processing unit 1044 requests the client 1046 associated with one of the planning units 106 located in a hierarchy one level lower than the planning unit 104 to notify the one of the planning units 106 of control information for instructing the start or stop of processing corresponding to the one of the planning units 106.

Moreover, in a case where a condition defined in advance to change a current state corresponding to one of the planning units 102 located in a hierarchy one level higher than the planning unit 104 between the plurality of types of predetermined states is satisfied, the processing unit 1044 requests the server 1040 associated with the one of the planning units 102 to change the state held in the state machine 1042 in the requested server 1040. For example, in this case, the processing unit 1044 first determines a state after the change corresponding to the one of the planning units 102 on the basis of the state change (transition) setting as illustrated in Fig. 6. Then, the processing unit 1044 requests the server 1040 associated with the one of the planning units 102 to change the current state held by the associated server 1040 (the state machine 1042 in the associated server 1040) to the determined state.

For example, the processing unit 1044 calls a predetermined mathematical function for causing the change to the determined state (Call), thereby requesting the associated server 1040 for the change of the state held by the state machine 1042 in the associated server 1040. Here, the predetermined mathematical function can be defined in advance for each state after the change. For example, the mathematical function for causing the change to "ACTIVATING" may be defined as setActivating(), the mathematical function for causing the change to "SUCCEEDED" may be defined as setSucceeded(), the mathematical function for causing the change to "PREEMPTING" may be defined setPreempting(), and so forth.

Here, conditions for changing current states corresponding to the individual planning units 102 are set in advance with respect to the processing unit 1044. For example, these conditions are set according to the degree of progress of processing defined for the processing unit 1044, and the like. As an example, "changing the current state to "APPROACHING" at a timing when 80% of the entire processing defined for the processing unit 1044 is completed in a case where the current state is "ACTIVE"" may be defined as one of these conditions.

### {2-1-3. Communication Unit 160}

The configuration of the communication unit 160 can include a communication interface such as a network card or an antenna. The communication unit 160 transmits and receives information to and from an external apparatus via the communication network 22, for example. For example, the communication unit 160 receives user operation information from an external apparatus.

### {2-1-4. Sensor Unit 162}

The sensor unit 162 performs sensing regarding, for example, the outside world or the motion state of the robot 10. The sensor unit 162 includes, for example, a camera (image sensor), a depth sensor (for example, a time-of-flight type sensor or a stereo camera), a microphone, an acceleration sensor, a gyroscope, a temperature sensor, a geomagnetic sensor, and/or a torque sensor. Moreover, the sensor unit 162 can include a receiver that receives a positioning signal from a positioning satellite of a global positioning system (GPS), a global navigation satellite system (GLONASS), or the like.

### {2-1-5. Storage Unit 164}

The configuration of the storage unit 164 can include a storage apparatus such as a hard disk drive (HDD). The storage unit 164 stores various types of data and various types of software.

### {2-1-6. Moving Mechanism 166}

The moving mechanism 166 is a mechanism for the robot 10 to move. For example, the moving mechanism 166 may include a plurality of wheels, a plurality of leg portions for walking (for example, two legs, or four legs), or an endless track mechanism such as a caterpillar (registered trademark).

For example, the moving mechanism 166 includes one or more actuators. In this case, the robot 10 can move in such a manner that the one or more actuators are driven on the basis of power supplied from a power supply unit (not illustrated) in the robot 10 and a control signal passed from the control unit 150.

### <2-2. Flow of Processing>

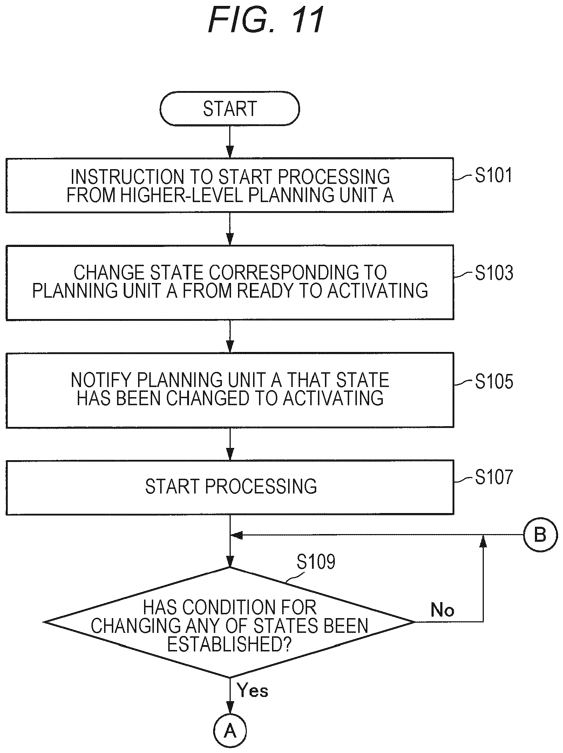

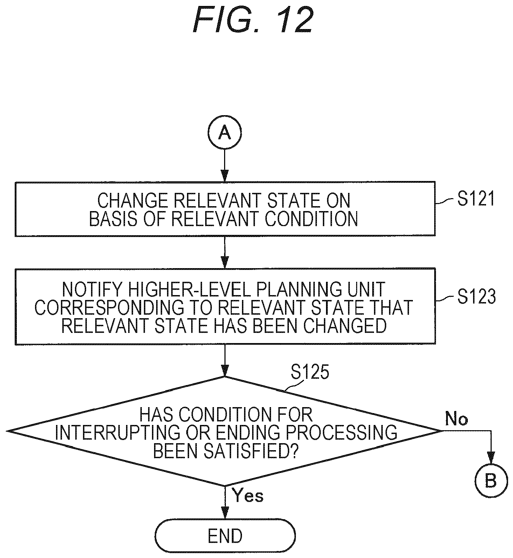

The configuration according to the first embodiment has been described above. Next, an example of the flow of processing according to the first embodiment will be described with reference to Figs. 11 and 12. Here, an example of the flow of processing of a certain planning unit 104 in the robot 10 will be described.

Fig. 11 is a flowchart illustrating a part of the flow of processing of a certain planning unit 104. As illustrated in Fig. 11, first, one of the planning units 102 located in a hierarchy one level higher than the planning unit 104 transmits control information for instructing the start of processing corresponding to the planning unit 104, to the server 1040 (in the planning unit 104) associated with the one of the planning units 102. Then, the associated server 1040 notifies the processing unit 1044 in the planning unit 104 of the received control information (S101).

Thereafter, the processing unit 1044 in the planning unit 104 requests the server 1040 associated with the one of the higher-level planning units 102 to change a state corresponding to the one of the higher-level planning units 102 from "READY" to "ACTIVATING", on the basis of the received control information. Then, the associated server 1040 changes the current state held by the state machine 1042 in the associated server 1040 from "READY" to "ACTIVATING" (S103).

Subsequently, the associated server 1040 notifies the one of the higher-level planning units 102 of information indicating that the state corresponding to the one of the higher-level planning units 102 has been changed to "ACTIVATING" (S105).

Subsequently, the processing unit 1044 in the planning unit 104 starts processing defined in advance for the planning unit 104 regarding planning of the action of the robot 10 (S107).

Thereafter, the processing unit 1044 continues to execute the defined processing until a condition for changing any of current states held by the respective servers 1040 in the planning unit 104 is established (S109: No).

Here, the flow of processing in a case where the above-mentioned condition for changing any of states is established (S109: Yes) will be described with reference to Fig. 12. As illustrated in Fig. 12, in this case, the processing unit 1044 first requests the server 1040 corresponding to a relevant state to change the relevant state between the plurality of types of predetermined states, on the basis of the state transition diagram illustrated in Fig. 6. Then, the requested server 1040 changes the state held by the state machine 1042 in the requested server 1040 to another state on the basis of this request (S121).

Subsequently, the requested server 1040 notifies the higher-level planning unit 102 associated with the requested server 1040 of information indicating that the change to the another state has been made (S123).

Thereafter, in a case where a condition for interrupting or ending relevant processing is satisfied (S125: Yes), the planning unit 104 interrupts or ends the relevant processing. On the other hand, in a case where a condition for interrupting or ending relevant processing is not satisfied (S125: No), the planning unit 104 performs the processing in and after S109 again.

### <2-3. Effects>

As described thus far, the robot 10 according to the first embodiment includes one or more planning units that perform predetermined processing relating to planning of the action while changing the state between the plurality of types of predetermined states, and, in a case where the state has been changed, every one of the one or more planning units notifies a planning unit at a higher level than the one of the one or more planning units of information indicating that the state has been changed. For this reason, for example, more diverse types of processing can be fulfilled regarding planning of the action of the robot 10 as compared with known technologies.

For example, every one planning unit holds states corresponding to all of the respective planning units located in an immediate higher hierarchy than the one planning unit, and besides changes each of the states corresponding to all of the respective higher-level planning units between the plurality of types of predetermined states, on the basis of the state transition diagram illustrated in Fig. 6. For this reason, for example, the action planning unit 100 including a plurality of planning units having different execution cycles can take an arbitrary hierarchical structure.

As described above, according to the first embodiment, it is possible to provide a software framework in which a standard interface between respective planning units is specified such that an arbitrary hierarchical structure that can be assumed in various autonomous apparatuses (such as various robots) can be fulfilled. Consequently, the applicability of the algorithm is improved. For example, an algorithm developed exclusively for a certain robot can be made applicable for another type of robot. As a result, software development efficiency can also be improved.

### <<3. Second Embodiment>>

The first embodiment has been described above. As described earlier, the plurality of planning units in the robot 10 according to the first embodiment can make motions concurrently and simultaneously, and the planning units can also cooperate with each other by asynchronous communication.

Meanwhile, from the viewpoint of a developer who develops the robot 10, for example, there is a problem that the following difficulties can occur. Firstly, it can be difficult for the developer to grasp the motion status of each planning unit in the robot 10 during running of the robot 10. Secondly, in a case where a defect occurs in one or more planning units in the robot 10, it can be difficult for the developer to analyze the defect.

Next, a second embodiment of the present disclosure will be described. As will be described later, according to the second embodiment, it is possible to visualize the motion history (or the motion status) of each planning unit. Consequently, the development of the robot 10 can be further facilitated.

### <3-1. Configuration>

First, the functional configuration of a robot 10 according to the second embodiment will be described. Each constituent element included in the robot 10 according to the second embodiment is similar to that of the first embodiment illustrated in, for example, Figs. 3, 4, and 10. In the following, only contents different from the contents of the first embodiment will be described, and description of the same contents will be omitted.

### {3-1-1. Planning Unit}

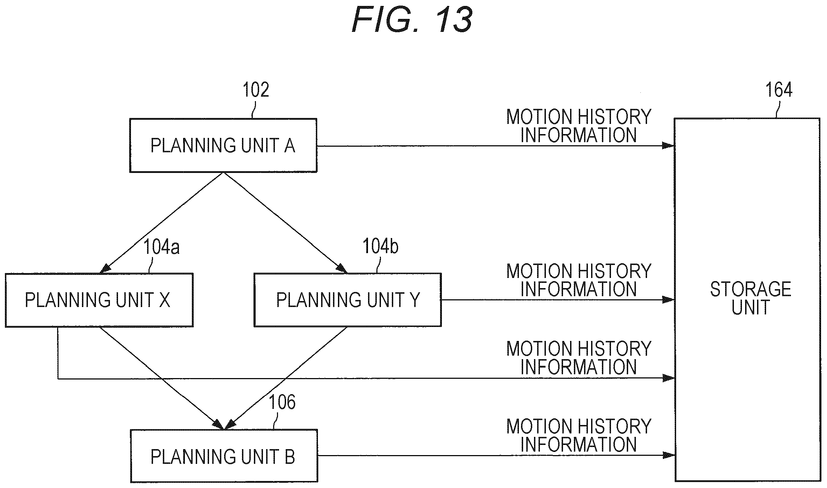

As illustrated in Fig. 13, for example, each planning unit according to the second embodiment outputs information indicating that the state has been changed, to a storage unit 164 (for example, to a predetermined area of the storage unit 164), as motion history information, every time the state is changed. For example, each time any one planning unit changes a state corresponding to one of all the planning units located in a hierarchy one level higher than the any one planning unit, the any one planning unit outputs information indicating that the state corresponding to the one of the higher-level planning units has been changed, to the storage unit 164 as the motion history information. Here, "the information indicating that the state has been changed" includes, for example, the date and time when the state was changed, identification information regarding the state before the change, identification information regarding the state after the change, and identification information regarding the one of the higher-level planning units.

Moreover, each time any one planning unit notifies one of all the planning units located in a hierarchy one level higher than the any one planning unit of information indicating that the state has been changed, the any one planning unit can also output information indicating that the notification (message) has been transmitted to the one of the higher-level planning units, to the storage unit 164 as the motion history information. Here, "the information indicating that the notification has been transmitted" includes, for example, the transmission date and time of the notification, identification information regarding the planning unit that is the transmission destination of the notification, and the identification number of the notification.

Moreover, each time any one planning unit receives a notification indicating that the state has been changed, from one of the planning units located in a hierarchy one level higher than the any one planning unit, the any one planning unit can also output information indicating that the notification for the change of the state has been received, to the storage unit 164 as the motion history information. Here, "the information indicating that the notification for the change of the state has been received" includes, for example, the reception date and time of the notification, identification information regarding the planning unit that is the transmission source of the notification, and the identification number of the notification.

Besides, each time any one planning unit uses a function (for example, a mathematical function) defined in advance for the any one planning unit, the any one planning unit can also output information indicating that the function has been used (including, for example, the date and time when the function was used, and identification information regarding the used mathematical function), to the storage unit 164 as the motion history information. Additionally, for example, every time an arbitrary event defined in advance happens during the execution of processing corresponding to any one planning unit, the any one planning unit can also output event happening information (including, for example, the event happening time and identification information regarding the event), to the storage unit 164 as the motion history information.

### (3-1-1-1. Motion History Information)

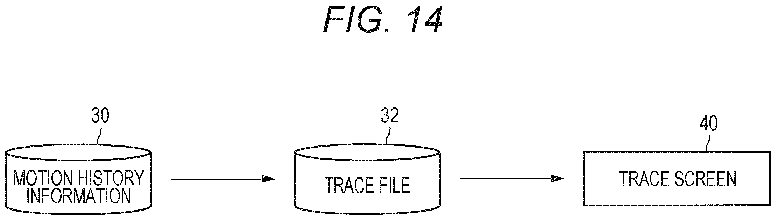

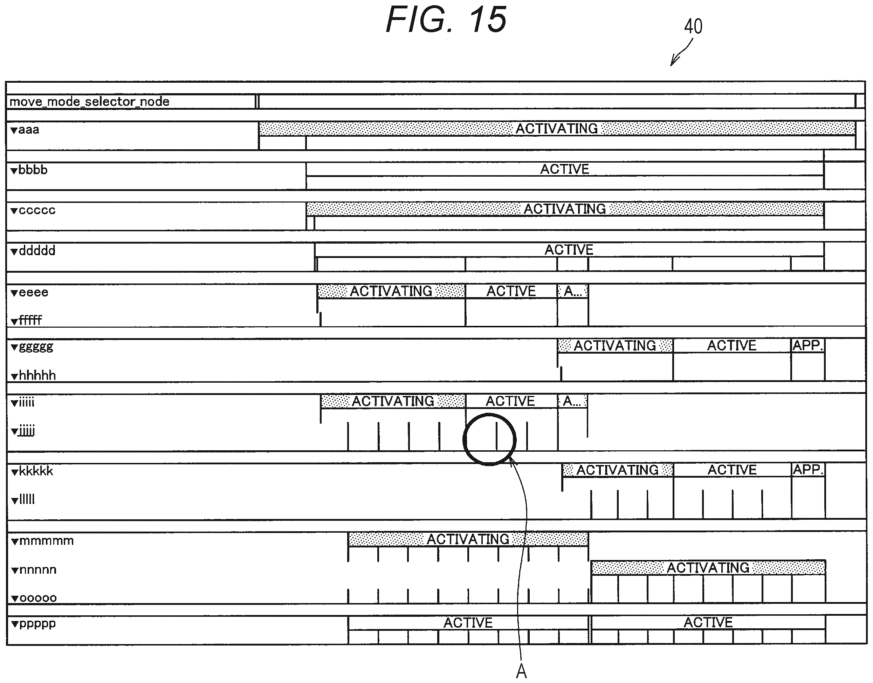

In the second embodiment, for example, a trace screen as illustrated in Fig. 15 for visualizing the motion history of each planning unit can be displayed on the basis of the motion history information retained in the storage unit 164. For example, as illustrated in Fig. 14, first, motion history information 30 retained in the storage unit 164 can be converted into a trace file 32 for displaying a trace screen. Then, the trace screen can be displayed, for example, by a terminal 20 on the basis of the trace file 32.

For example, the terminal 20 receives the trace file 32 from the robot 10 via a communication network 22, and then controls the display of the trace screen on the basis of the received trace file 32. Alternatively, the terminal 20 may receive all pieces of the motion history information retained in the storage unit 164 via the communication network 22 to convert all the respective pieces of the motion history information into the trace files 32, and then may control the display of the trace screen on the basis of all of the converted trace files 32.

### (3-1-1-2. Trace Screen)

Fig. 15 is a diagram illustrating a display example of the trace screen (trace screen 40). As illustrated in Fig. 15, the trace screen 40 can display a list of histories of state changes in respective planning units along the time axis. According to this display example, for example, when a defect occurs in one or more planning units, the developer can confirm the motion history of each planning unit up to the happening time of the defect as a kind of list along the time axis. For this reason, it is possible to more easily analyze the content and cause of the defect.

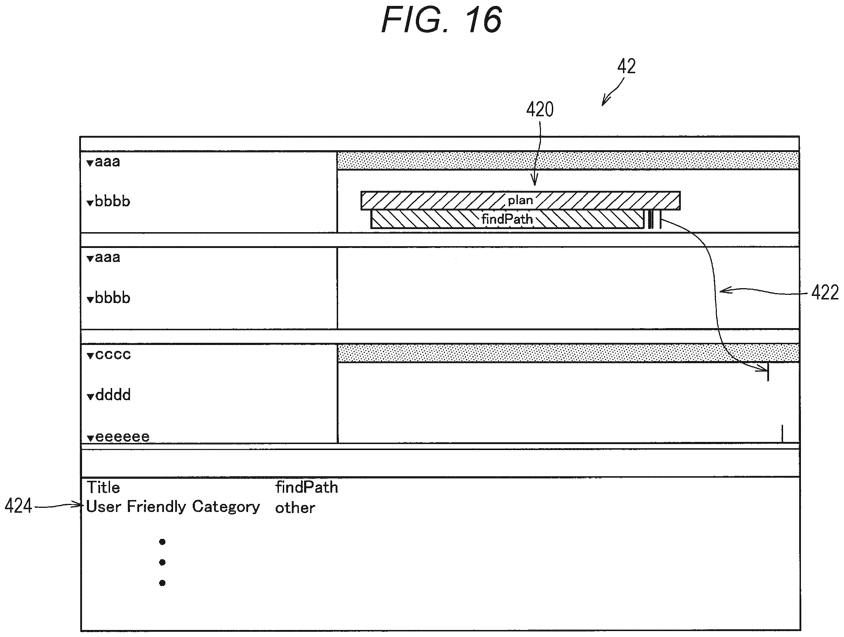

Fig. 16 is a diagram illustrating a display example of a detailed screen (detailed screen 42) illustrating detailed information in a partial area (specifically, an area indicated by "A") in the trace screen 40 illustrated in Fig. 15. As illustrated in Fig. 16, the detailed screen 42 includes a detailed history display 420 illustrating the time series of the motion status of each planning unit during a time zone corresponding to the relevant area (for example, the state of the relevant planning unit, the event that happened, and the mathematical function that was used), a communication history display 422 illustrating the communication history between individual planning units during the corresponding time zone, and a detailed information display field 424 illustrating detailed information regarding one event that happened during the corresponding time zone. Here, the detailed history display 420 can be displayed on the basis of, for example, the "event happening information" described above. The communication history display 422 can be displayed on the basis of, for example, a combination of the "information indicating that the notification has been transmitted" and the "information indicating that the notification has been received" described above. The detailed information display field 424 can be displayed on the basis of, for example, the "event happening information" described above.

### <3-2. Flow of Processing>

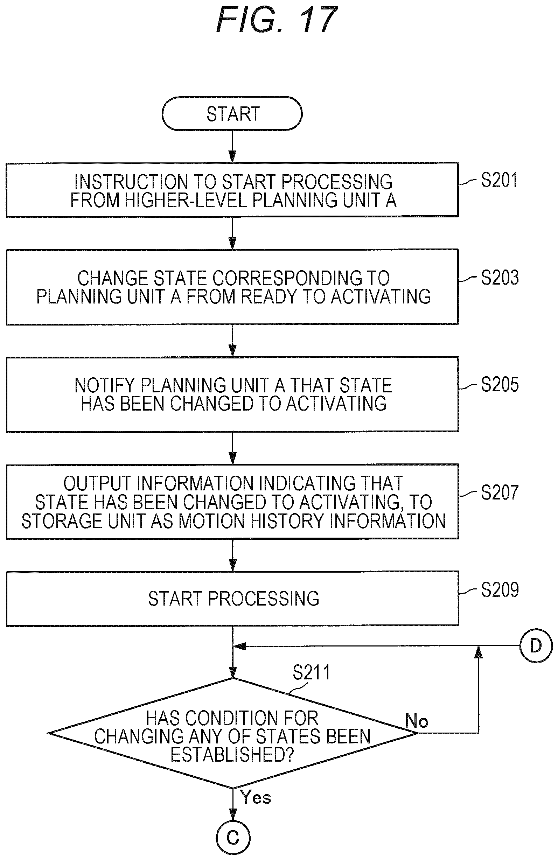

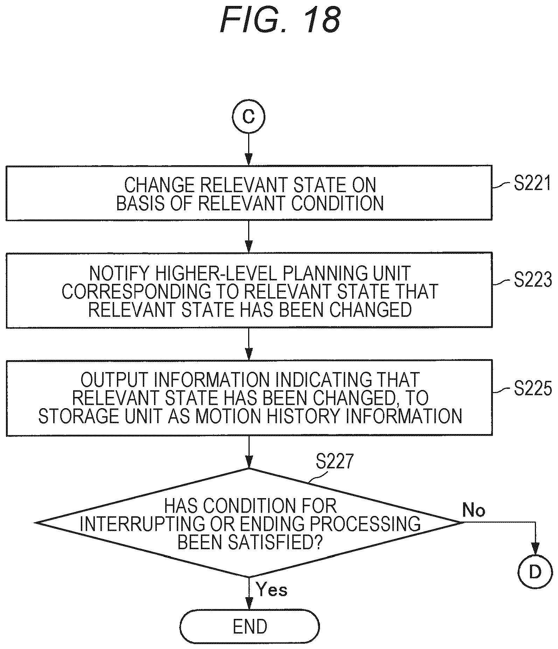

The configuration according to the second embodiment has been described above. Next, an example of the flow of processing according to the second embodiment will be described with reference to Figs. 17 and 18. Here, an example of the flow of processing of a certain planning unit 104 in the robot 10 will be described.

Fig. 17 is a flowchart illustrating a part of the flow of processing of a certain planning unit 104 according to the second embodiment. Note that processing in S201 to S205 illustrated in Fig. 17 is similar to the processing in S101 to S105 in the first embodiment.

After S205, the associated server 1040 in the planning unit 104 outputs information indicating that the state held by the associated server 1040 has been changed to "ACTIVATING", to the storage unit 164 as motion history information (S207).

Note that processing in S209 and S211 illustrated in Fig. 17 is similar to the processing in S107 and S109 in the first embodiment.

Here, the flow of processing after S211 will be described with reference to Fig. 18. Processing in S221 and S223 illustrated in Fig. 18 is similar to the processing in S121 and S123 in the first embodiment.

After S223, the associated server 1040 in the planning unit 104 outputs information indicating that the state held by the associated server 1040 has been changed, to the storage unit 164 as motion history information (S225).

Note that processing in S227 illustrated in Fig. 18 is similar to the processing in S125 in the first embodiment.

### <3-3. Effects>

As described thus far, each planning unit according to the second embodiment outputs information indicating that the state has been changed, to the storage unit 164 as motion history information, every time the state is changed. Moreover, the trace screen can be displayed on the basis of the output motion history information. Accordingly, since the motion history (or motion status) of each planning unit can be visualized, the development of the robot 10 can be further facilitated.

For example, when a defect occurs in one or more planning units, since the motion history of each planning unit up to the happening time of the defect can be displayed, the developer can confirm the displayed motion history as a kind of list along the time axis. For this reason, it is possible to more easily analyze the content and cause of the defect.

### <<4. Variations>>

The favorable embodiments of the present disclosure have been described in detail thus far with reference to the accompanying drawings. However, the present disclosure is not limited to these examples. It is clear that a person with average knowledge on the technological field to which the present disclosure belongs can arrive at various variations or modifications within a range of the technological scope disclosed in claims and, as a matter of course, these variations or modifications are comprehended as part of the technological scope of the present disclosure.

### <4-1. First Variation>

In each of the above-described embodiments, an example in which the information processing apparatus according to the present disclosure is the robot 10 has been described; however, the embodiment is not limited to this example. The information processing apparatus may be, for example, a server machine, a general-purpose personal computer (PC), a tablet type terminal, a game machine, a mobile phone such as a smartphone, a wearable device such as a head mounted display (HMD) or a smart watch, or an in-car apparatus (such as a car navigation apparatus).

Additionally or alternatively, the information processing apparatus may plan the action of another apparatus (such as another robot) or the action of a human (or various vehicles driven by humans) instead of planning its own action.

### <4-2. Second Variation>

Each step in the flow of processing according to each of the above-described embodiments does not necessarily have to be processed in the described order. For example, the respective steps may be processed by changing the order as appropriate. Furthermore, the respective steps may be processed partially in parallel or separately instead of being processed in time series. In addition, a part of the described steps may be omitted or another step may be further added.

Additionally, according to each of the above-described embodiments, a computer program for causing hardware such as a CPU, a ROM, and a RAM to demonstrate functions equivalent to the functions of each component (for example, the action planning unit 100) of the robot 10 according to each of the above-described embodiments can also be provided. Besides, a storage medium having the above computer program recorded thereon is also provided.

Furthermore, the effects described in the present description are merely illustrative or exemplary and are not limiting. That is, the technology according to the present disclosure can exhibit other effects obvious to those skilled in the art from the description of the present description together with the above-described effects or instead of the above-described effects.

### REFERENCE SIGNS LIST

- 10: Robot
- 20: Terminal
- 22: Communication network
- 100: Action planning unit
- 102, 104, 106: Planning unit
- 150: Control unit
- 160: Communication unit
- 162: Sensor unit
- 164: Storage unit
- 166: Moving mechanism
- 1040: Server
- 1042: State machine
- 1044: Processing unit
- 1046: Client

## Claims

1. An information processing apparatus **characterized in that** it comprises:
a first planning unit at a lower level in a hierarchy, configured to perform predetermined processing for planning of an action of the information processing apparatus while changing a state of the first planning unit between a plurality of types of predetermined states of the first planning unit, wherein
in a case where the state has been changed, the first planning unit is configured to notify a second planning unit at a higher level in the hierarchy, being higher than the lower level of the first planning unit, of information indicating that the state has been changed, and
the plurality of types of predetermined states includes a plurality of types of states indicating that normal execution of the predetermined processing is in progress.

2. The information processing apparatus according to claim 1, wherein degrees of progress of the predetermined processing corresponding to respective states of the plurality of types of the states are different from each other.

3. The information processing apparatus according to claim 2, wherein
the plurality of types of predetermined states further includes at least one type of a second state different from the first state, and
the at least one type of the second state includes at least one of a state indicating that standby is in progress, a state indicating that abnormal ending is in progress, a state indicating that execution is being interrupted, or information indicating that normal ending has been made.

4. The information processing apparatus according to claim 3, wherein the predetermined processing is processing for the planning of the action of the information processing apparatus of a robot (10).

5. The information processing apparatus according to claim 4, wherein
the higher level of the second planning unit is immediately higher than the lower level of the first planning unit, and one or more second planning units are present, and
the first planning unit is configured to hold a state corresponding to each of the one or more second planning units, and change each state corresponding to each of the one or more second planning units between the plurality of types of predetermined states.

6. The information processing apparatus according to claim 5, wherein, for each of the one or more second planning units, in a case where a state corresponding to one of the second planning units has been changed, the first planning unit is configured to notify the one of the second planning units of information indicating that the state corresponding to the one of the second planning units has been changed.

7. The information processing apparatus according to claim 6, wherein the information indicating that the state corresponding to the one of the second planning units has been changed includes identification information regarding a state after the change corresponding to the one of the second planning units.

8. The information processing apparatus according to claim 6, wherein, for each of the one or more second planning units, the first planning unit is configured to change a current state corresponding to one of the second planning units, to any other state associated with the current state, among the plurality of types of predetermined states.

9. The information processing apparatus according to claim 8, wherein, for each of the one or more second planning units, the first planning unit is configured to use a function for causing a change to any other state associated with a current state corresponding to the one of the second planning units, among the plurality of types of predetermined states, to change the current state to the any other state.

10. The information processing apparatus according to claim 8, wherein
the first planning unit is further configured to receive first control information for controlling the first planning unit to execute processing, from at least one of the one or more second planning units, and
the first planning unit is configured to perform the predetermined processing on basis of the received first control information.

11. The information processing apparatus according to claim 10, wherein:
the first planning unit is configured to perform the predetermined processing further on basis of a combination of states corresponding to respective ones of the one or more second planning units; or
the first planning unit is configured to change a state corresponding to at least one of the one or more second planning units, on basis of progress of the predetermined processing; or
the information processing apparatus further comprises:
the one or more second planning units, wherein
each of the one or more second planning units is configured to perform processing for the planning of the action, the processing being different from the predetermined processing.

12. The information processing apparatus according to claim 10, further comprising:
the one or more second planning units, wherein:
each of the one or more second planning units is configured to perform processing for the planning of the action, the processing being different from the predetermined processing, and
the first planning unit is further configured to notify one of one or more third planning units at a lower level than the first planning unit of second control information for controlling execution of processing corresponding to the one of the one or more third planning units, on basis of a combination of states corresponding to respective ones of the one or more second planning units or progress of the predetermined processing.

13. The information processing apparatus according to claim 12, wherein:
the first planning unit is configured to receive, from every one of the one or more third planning units, information indicating that a state of the one of the one or more third planning units has changed, or information indicating progress of processing corresponding to the one of the one or more third planning units, and
the first planning unit is configured to perform the predetermined processing further on basis of the received information indicating that a state of the one of the one or more third planning units has changed, or the received information indicating progress of processing corresponding to the one of the one or more third planning units; or
the one or more third planning units are located in an immediate lower hierarchy than the first planning unit,
the one or more third planning units are further provided, and
each of the one or more third planning units is configured to perform processing for the planning of the action, the processing being different from the predetermined processing; or
the one or more third planning units are located in an immediate lower hierarchy than the first planning unit, and
the one or more third planning units are further provided, and
each of the one or more third planning units is configured to perform processing for the planning of the action, the processing being different from the predetermined processing, and
the first planning unit includes a plurality of servers whose number is equal to or greater than a number of the one or more second planning units,
a processing unit that is configured to perform the predetermined processing, and
a plurality of clients whose number is equal to or greater than a number of the one or more third planning units,
each of one or more servers out of the plurality of servers is configured to hold a state corresponding to a different one of the second planning units among the one or more second planning units, and, in a case where the state has been changed, to notify the different one of the second planning units corresponding to the state of information indicating that the state has been changed, and
each of one or more clients out of the plurality of clients is configured to notify a different one of the third planning units among the one or more third planning units of control information for controlling execution of processing corresponding to the different one of the third planning units; or
the one or more third planning units are located in an immediate lower hierarchy than the first planning unit, and
the one or more third planning units are further provided, and
each of the one or more third planning units is configured to perform processing for the planning of the action, the processing being different from the predetermined processing, and
for each of the one or more second planning units, in a case where a state corresponding to one of the second planning units has been changed, the first planning unit is further configured to output information indicating that the state corresponding to the one of the second planning units has been changed, to a storage unit, and
history information regarding changes of states of a plurality of planning units including the first planning unit is displayed on a display unit on basis of the information indicating that the state has been changed which is retained in the storage unit.

14. An information processing method **characterized in that** it comprises:
performing at a lower level in a hierarchy, by a processor, predetermined processing for planning of an action of the information processing apparatus while changing a state of the planning between a plurality of types of predetermined states of the planning; and
in a case where the state has been changed, notifying a second planning unit at a higher level in the hierarchy, being higher than the lower level, of information indicating that the state has been changed, wherein
the plurality of types of predetermined states includes a plurality of types of states indicating that normal execution of the predetermined processing is in progress.

15. A program for causing a computer to function as
a first planning unit at a lower level in a hierarchy, configured to perform predetermined processing for planning of an action of an information processing apparatus while changing a state of the first planning unit between a plurality of types of predetermined states of the first planning unit, wherein
in a case where the state has been changed, the first planning unit is configured to notify a second planning unit at a higher level in the hierarchy, being higher than the lower level of the first planning unit, of information indicating that the state has been changed, and
the plurality of types of predetermined states includes a plurality of types of states indicating that normal execution of the predetermined processing is in progress.

## Patentansprüche

1. Informationsverarbeitungsvorrichtung, **dadurch gekennzeichnet, dass** sie umfasst:
eine erste Planungseinheit auf einer niedrigeren Ebene in einer Hierarchie, die dazu ausgelegt ist, ein vorbestimmtes Verarbeiten zum Planen einer Handlung der Informationsverarbeitungsvorrichtung durchzuführen, während des Änderns eines Zustands der ersten Planungseinheit zwischen einer Mehrzahl von Arten von vorbestimmten Zuständen der ersten Planungseinheit, wobei
in einem Fall, in dem der Zustand verändert worden ist, die erste Planungseinheit dazu ausgelegt ist, eine zweite Planungseinheit auf einer höheren Ebene in der Hierarchie, die höher ist als die untere Ebene der ersten Planungseinheit, über Informationen zu benachrichtigen, die angeben, dass der Zustand verändert worden ist, und
die Mehrzahl der Arten von vorbestimmten Zuständen eine Mehrzahl von Arten von Zuständen beinhaltet, die angeben, dass die normale Ausführung des vorbestimmten Verarbeitens im Gange ist.

2. Informationsverarbeitungsvorrichtung nach Anspruch 1, wobei sich die Fortschrittsgrade des vorbestimmten Verarbeitens, die den jeweiligen Zuständen der Mehrzahl von Arten von Zuständen entsprechen, voneinander unterschieden.

3. Informationsverarbeitungsvorrichtung nach Anspruch 2, wobei
die Mehrzahl der Arten vorbestimmter Zustände ferner mindestens eine Art eines zweiten Zustands beinhaltet, der sich vom ersten Zustand unterscheidet, und
die mindestens eine Art des zweiten Zustands einen Zustand beinhaltet, der angibt, dass der Standby-Zustand im Gange ist und/oder einen Zustand, der angibt, dass das anormale Beenden im Gange ist und/oder einen Zustand, der angibt, dass die Ausführung unterbrochen wird und/oder Informationen, die angeben, dass das normale Beenden stattgefunden hat.

4. Informationsverarbeitungsvorrichtung nach Anspruch 3, wobei das vorbestimmte Verarbeiten ein Verarbeiten zum Planen der Handlung der Informationsverarbeitungsvorrichtung eines Roboters (10) ist.

5. Informationsverarbeitungsvorrichtung nach Anspruch 4, wobei
die höhere Ebene der zweiten Planungseinheit unmittelbar höher als die niedrigeren Ebene der ersten Planungseinheit ist, und eine oder mehrere zweite Planungseinheiten vorhanden sind, und
die erste Planungseinheit dazu ausgelegt ist, einen Zustand zu halten, der jeder der einen oder mehreren zweiten Planungseinheiten entspricht, und jeden Zustand, der jeder der einen oder mehreren zweiten Planungseinheiten entspricht, zwischen der Mehrzahl von Arten von vorbestimmten Zuständen zu verändern.

6. Informationsverarbeitungsvorrichtung nach Anspruch 5, wobei für jede der einen oder mehreren zweiten Planungseinheiten in einem Fall, in dem ein einer der zweiten Planungseinheiten entsprechender Zustand verändert worden ist, die erste Planungseinheit dazu ausgelegt ist, die eine der zweiten Planungseinheiten über Informationen zu benachrichtigen, die angeben, dass der der einen der zweiten Planungseinheiten entsprechende Zustand verändert worden ist.

7. Informationsverarbeitungsvorrichtung nach Anspruch 6, wobei die Informationen, die angeben, dass der Zustand, der einer der zweiten Planungseinheiten entspricht, verändert worden ist, Identifizierungsinformationen bezüglich eines Zustands nach der Veränderung beinhalten, der der einen der zweiten Planungseinheiten entspricht.

8. Informationsverarbeitungsvorrichtung nach Anspruch 6, wobei für jede der einen oder mehreren zweiten Planungseinheiten die erste Planungseinheit dazu ausgelegt ist, einen aktuellen Zustand, der einer der zweiten Planungseinheiten entspricht, in einen beliebigen anderen Zustand zu verändern, der dem aktuellen Zustand unter der Mehrzahl von Arten von vorbestimmten Zuständen zugeordnet ist.

9. Informationsverarbeitungsvorrichtung nach Anspruch 8, wobei für jede der einen oder mehreren zweiten Planungseinheiten die erste Planungseinheit dazu ausgelegt ist, eine Funktion zum Veranlassen einer Änderung in einen beliebigen anderen Zustand zu verwenden, der einem aktuellen Zustand zugeordnet ist, der der einen der zweiten Planungseinheiten entspricht, aus der Mehrzahl von Arten von vorbestimmten Zuständen den aktuellen Zustand in den beliebigen anderen Zustand zu ändern.

10. Informationsverarbeitungsvorrichtung nach Anspruch 8, wobei
die erste Steuereinheit ferner dazu ausgelegt ist, erste Steuerinformationen zum Steuern der ersten Steuereinheit, um das Verarbeiten von mindestens einer der einen oder mehreren zweiten Planungseinheiten auszuführen, zu empfangen, und
die erste Planungseinheit dazu ausgelegt ist, das vorbestimmte Verarbeiten auf der Grundlage der empfangenen ersten Steuerinformationen durchzuführen.

11. Informationsverarbeitungsvorrichtung nach Anspruch 10, wobei:
die erste Planungseinheit dazu ausgelegt ist, das vorbestimmte Verfahren ferner auf der Grundlage einer Kombination von Zuständen durchzuführen, die den jeweiligen der einen oder mehreren zweiten Planungseinheiten entsprechen; oder
die erste Planungseinheit dazu ausgelegt ist, einen Zustand zu verändern, der mindestens einer der einen oder mehreren zweiten Planungseinheiten entspricht, auf der Grundlage des Fortschritts des vorbestimmten Verarbeitens; oder
die Informationsverarbeitungsvorrichtung ferner umfasst:
die eine oder mehrere zweite Planungseinheiten, wobei
jede der einen oder mehreren zweiten Planungseinheiten dazu ausgelegt ist, ein Verarbeiten für das Planen der Handlung durchzuführen, wobei sich das Verarbeiten von dem vorbestimmten Verarbeiten unterscheidet.

12. Informationsverarbeitungsvorrichtung nach Anspruch 10, ferner umfassend:
die eine oder mehrere zweite Planungseinheiten, wobei:
jede der einen oder mehreren zweiten Planungseinheiten dazu ausgelegt ist, ein Verarbeiten für das Planen der Handlung durchzuführen, wobei sich das Verarbeiten von dem vorbestimmten Verarbeiten unterscheidet, und
die erste Steuereinheit ferner dazu ausgelegt ist, eine von einer oder mehreren dritten Steuereinheiten auf einer niedrigeren Ebene als die erste Steuereinheit über eine zweite Steuerinformation zum Steuern der Ausführung des Verarbeitens, die der einen der einen oder mehreren dritten Planungseinheiten entspricht, auf der Grundlage einer Kombination von Zuständen, die den jeweiligen der einen oder mehreren zweiten Planungseinheiten entsprechen, oder des Fortschritts des vorbestimmten Verarbeitens zu benachrichtigen.

13. Informationsverarbeitungsvorrichtung nach Anspruch 12, wobei:
die erste Planungseinheit dazu ausgelegt ist, von jeder der einen oder mehreren dritten Planungseinheiten Informationen zu empfangen, die angeben, dass sich ein Zustand der einen der einen oder mehreren dritten Planungseinheiten verändert hat, oder Informationen, die den Fortschritt des Verarbeitens entsprechend einem oder mehreren der dritten Planungseinheiten, angeben, und
die erste Planungseinheit dazu ausgelegt ist, das vorbestimmte Verarbeiten ferner auf der Grundlage der empfangenen Informationen durchzuführen, die angeben, dass sich ein Zustand der einen der einen oder mehreren dritten Planungseinheiten verändert hat, oder der empfangenen Informationen, die den Fortschritt des Verarbeitens entsprechend der einen der einen oder mehreren dritten Planungseinheiten angeben; oder
die eine oder mehrere dritte Planungseinheiten sich in einer unmittelbar niedrigeren Hierarchie als die erste Planungseinheit befinden,
die eine oder mehrere dritte Planungseinheiten ferner bereitgestellt werden, und
jede der einen oder mehreren dritten Planungseinheiten dazu ausgelegt ist, ein Verarbeiten für das Planen der Handlung durchzuführen, wobei sich das Verarbeiten von dem vorbestimmten Verarbeiten unterscheidet; oder
die eine oder mehreren dritten Planungseinheiten sich in einer unmittelbar niedrigeren Hierarchie als die erste Planungseinheit befinden, und
die eine oder mehrere dritte Planungseinheiten ferner bereitgestellt werden, und
jede der einen oder mehreren dritten Planungseinheiten dazu ausgelegt ist, ein Verarbeiten für das Planen der Handlung durchzuführen, wobei sich das Verarbeiten von dem vorbestimmten Verarbeiten unterscheidet, und
die erste Planungseinheit eine Mehrzahl von Servern beinhaltet, deren Anzahl gleich oder größer ist als eine Anzahl der einen oder mehreren zweiten Planungseinheiten, eine Verarbeitungseinheit, die dazu ausgelegt ist, das vorbestimmte Verarbeiten durchzuführen, und
eine Mehrzahl von Clients, deren Anzahl gleich oder größer ist als die Anzahl der einen oder mehreren dritten Planungseinheiten,
jeder von einem oder mehreren Servern aus der Mehrzahl von Servern dazu ausgelegt ist, einen Zustand zu halten, der einer unterschiedlichen der zweiten Planungseinheiten unter der einen oder mehreren zweiten Planungseinheiten entspricht, und in einem Fall, in dem der Zustand verändert worden ist, die unterschiedliche der zweiten Planungseinheiten, die dem Zustand entspricht, über Informationen zu benachrichtigen, die angeben, dass der Zustand verändert worden ist, und
jeder von einem oder mehreren Clients aus der Mehrzahl von Clients dazu ausgelegt ist, einer unterschiedlichen der dritten Planungseinheiten unter der einen oder mehreren dritten Planungseinheiten Steuerinformationen zum Steuern der Ausführung des Verarbeitens entsprechend der unterschiedlichen einen der dritten Planungseinheiten zu benachrichtigen; oder
die eine oder mehreren dritten Planungseinheiten sich in einer unmittelbar niedrigeren Hierarchie als die erste Planungseinheit befinden, und
die eine oder mehrere dritte Planungseinheiten ferner bereitgestellt werden, und
jede der einen oder mehreren dritten Planungseinheiten dazu ausgelegt ist, ein Verarbeiten für das Planen der Handlung durchzuführen, wobei sich das Verarbeiten von dem vorbestimmten Verarbeiten unterscheidet, und
für jede der einen oder mehreren zweiten Planungseinheiten in einem Fall, in dem ein Zustand, der einer der zweiten Planungseinheiten entspricht, verändert worden ist, die erste Planungseinheit ferner dazu ausgelegt ist, Informationen, die angeben, dass der Zustand, der der einen der zweiten Planungseinheiten entspricht, verändert worden ist, an eine Speichereinheit auszugeben, und
Verlaufsinformationen über Zustandsveränderungen einer Mehrzahl von Planungseinheiten einschließlich der ersten Planungseinheit auf einer Anzeigeeinheit auf der Grundlage der in der Speichereinheit festgehaltenen Angaben, die angeben, dass sich der Zustand verändert hat, angezeigt werden.

14. Informationsverarbeitungsverfahren, **dadurch gekennzeichnet, dass** es umfasst:
Durchführen eines vorbestimmten Verarbeitens zum Planen einer Handlung der Informationsverarbeitungsvorrichtung auf einer niedrigeren Ebene in einer Hierarchie durch einen Prozessor, während des Veränderns eines Zustands des Planens zwischen einer Mehrzahl von Arten von vorbestimmten Zuständen des Planens; und
in einem Fall, in dem der Zustand verändert worden ist, Benachrichtigen einer zweiten Planungseinheit auf einer höheren Ebene in der Hierarchie, die höher ist als die untere Ebene, über Informationen, die angeben, dass der Zustand verändert worden ist, wobei
die Mehrzahl der Arten von vorbestimmten Zuständen eine Mehrzahl von Arten von Zuständen beinhaltet, die angeben, dass die normale Ausführung des vorbestimmten Verarbeitens im Gange ist.

15. Programm zum Veranlassen eines Computers, als eine erste Planungseinheit auf einer niedrigeren Ebene in einer Hierarchie zu fungieren, dazu ausgelegt, ein vorbestimmtes Verarbeiten zum Planen einer Handlung einer Informationsverarbeitungsvorrichtung durchzuführen, während des Änderns eines Zustands der ersten Planungseinheit zwischen einer Mehrzahl von Arten von vorbestimmten Zuständen der ersten Planungseinheit, wobei
in einem Fall, in dem der Zustand verändert worden ist, die erste Planungseinheit dazu ausgelegt ist, eine zweite Planungseinheit auf einer höheren Ebene in der Hierarchie, die höher ist als die untere Ebene der ersten Planungseinheit, über Informationen zu benachrichtigen, die angeben, dass der Zustand verändert worden ist, und die Mehrzahl der Arten von vorbestimmten Zuständen eine Mehrzahl von Arten von Zuständen beinhaltet, die angeben, dass die normale Ausführung des vorbestimmten Verarbeitens im Gange ist.

## Revendications

1. Appareil de traitement d'informations **caractérisé en ce qu'**il comporte :
une première unité de planification à un niveau inférieur dans une hiérarchie, configurée pour effectuer un traitement prédéterminé en vue de la planification d'une action de l'appareil de traitement d'informations tout en changeant un état de la première unité de planification entre une pluralité de types d'états prédéterminés de la première unité de planification,
la première unité de planification étant configurée pour, dans un cas où l'état a été changé, notifier à une deuxième unité de planification située à un niveau supérieur dans la hiérarchie, qui est plus haut que le niveau inférieur de la première unité de planification, des informations indiquant que l'état a été changé, et
la pluralité de types d'états prédéterminés comprenant une pluralité de types d'états indiquant qu'une exécution normale du traitement prédéterminé est en cours.

2. Appareil de traitement d'informations selon la revendication 1, des degrés d'avancement du traitement prédéterminé qui correspondent à des états respectifs de la pluralité de types des états étant différents les uns des autres.

3. Appareil de traitement d'informations selon la revendication 2,
la pluralité de types d'états prédéterminés comprenant en outre au moins un type d'un deuxième état différent du premier état, et
le ou les types du deuxième état comprenant au moins un élément parmi un état indiquant qu'une veille est en cours, un état indiquant qu'une terminaison anormale est en cours, un état indiquant qu'une exécution est en cours d'interruption, ou une information indiquant qu'une terminaison normale a été réalisée.

4. Appareil de traitement d'informations selon la revendication 3, le traitement prédéterminé étant un traitement servant à la planification de l'action de l'appareil de traitement d'informations d'un robot (10) .

5. Appareil de traitement d'informations selon la revendication 4,
le niveau supérieur de la deuxième unité de planification étant immédiatement supérieur au niveau inférieur de la première unité de planification, et une ou plusieurs deuxièmes unités de planification étant présentes, et
la première unité de planification étant configurée pour conserver un état correspondant à la deuxième ou à chacune des deuxièmes unités de planification, et changer chaque état correspondant à la deuxième ou à chacune des deuxièmes unités de planification entre la pluralité de types d'états prédéterminés.

6. Appareil de traitement d'informations selon la revendication 5, pour la deuxième ou chacune des deuxièmes unités de planification, dans un cas où un état correspondant à une des deuxièmes unités de planification a été changé, la première unité de planification étant configurée pour notifier à l'unité considérée parmi les deuxièmes unités de planification des informations indiquant que l'état correspondant à l'unité considérée parmi les deuxièmes unités de planification a été changé.

7. Appareil de traitement d'informations selon la revendication 6, les informations qui indiquent que l'état correspondant à l'unité considérée parmi les deuxièmes unités de planification a été changé comprenant des informations d'identification concernant un état après le changement correspondant à l'unité considérée parmi les deuxièmes unités de planification.

8. Appareil de traitement d'informations selon la revendication 6, pour la deuxième ou chacune des deuxièmes unités de planification, la première unité de planification étant configurée pour changer un état actuel correspondant à une des deuxièmes unités de planification, en un quelconque autre état associé à l'état actuel, parmi la pluralité de types d'états prédéterminés.

9. Appareil de traitement d'informations selon la revendication 8, pour la deuxième ou chacune des deuxièmes unités de planification, la première unité de planification étant configurée pour utiliser une fonction servant à provoquer un changement vers un quelconque autre état associé à un état actuel correspondant à l'unité considérée parmi les deuxièmes unités de planification, parmi la pluralité de types d'états prédéterminés, pour changer l'état actuel en l'autre état quelconque.

10. Appareil de traitement d'informations selon la revendication 8,
la première unité de planification étant en outre configurée pour recevoir des premières informations de commande servant à commander la première unité de planification pour exécuter un traitement, en provenance d'au moins une de la ou des deuxièmes unités de planification, et
la première unité de planification étant configurée pour effectuer le traitement prédéterminé d'après les premières informations de commande reçues.

11. Appareil de traitement d'informations selon la revendication 10 :
la première unité de planification étant configurée pour effectuer le traitement prédéterminé en outre d'après une combinaison d'états correspondant à des unités respectives parmi la ou les deuxièmes unités de planification ; ou
la première unité de planification étant configurée pour changer un état correspondant à au moins une unité parmi la ou les deuxièmes unités de planification, d'après l'avancement du traitement prédéterminé ; ou
l'appareil de traitement d'informations comportant en outre :
la ou les deuxièmes unités de planification,
la deuxième ou chacune des deuxièmes unités de planification étant configurée pour effectuer un traitement en vue de la planification de l'action, le traitement étant différent du traitement prédéterminé.

12. Appareil de traitement d'informations selon la revendication 10, comportant en outre :
la ou les deuxièmes unités de planification :
la deuxième ou chacune des deuxièmes unités de planification étant configurée pour effectuer un traitement en vue de la planification de l'action, le traitement étant différent du traitement prédéterminé, et
la première unité de planification étant en outre configurée pour notifier à une unité parmi une ou plusieurs troisièmes unités de planification, à un niveau plus bas que la première unité de planification, des deuxièmes informations de commande servant à commander l'exécution d'un traitement correspondant à l'unité considérée parmi la ou les troisièmes unités de planification, d'après une combinaison d'états correspondant à des unités respectives parmi la ou les deuxièmes unités de planification ou l'avancement du traitement prédéterminé.

13. Appareil de traitement d'informations selon la revendication 12 :
la première unité de planification étant configurée pour recevoir, en provenance de la ou de chacune des troisièmes unités de planification, des informations indiquant qu'un état de l'unité considérée parmi la ou les troisièmes unités de planification a changé, ou des informations indiquant l'avancement d'un traitement correspondant à l'unité considérée parmi la ou les troisièmes unités de planification, et
la première unité de planification étant configurée pour effectuer le traitement prédéterminé en outre d'après les informations reçues indiquant qu'un état de l'unité considérée parmi la ou les troisièmes unités de planification a changé, ou les informations reçues indiquant l'avancement du traitement correspondant à l'unité considérée parmi la ou les troisièmes unités de planification ; ou
la ou les troisièmes unités de planification étant situées dans une hiérarchie immédiatement inférieure à celle de la première unité de planification,
la ou les troisièmes unités de planification étant en outre mises en place, et
la ou chacune des troisièmes unités de planification étant configurée pour effectuer un traitement en vue de la planification de l'action, le traitement étant différent du traitement prédéterminé ; ou
la ou les troisièmes unités de planification étant situées dans une hiérarchie immédiatement inférieure à celle de la première unité de planification, et
la ou les troisièmes unités de planification étant en outre mises en place, et
la ou chacune des troisièmes unités de planification étant configurée pour effectuer un traitement en vue de la planification de l'action, le traitement étant différent du traitement prédéterminé, et
la première unité de planification comprenant une pluralité de serveurs dont le nombre est supérieur ou égal à un nombre de la ou des deuxièmes unités de planification,
une unité de traitement qui est configurée pour effectuer le traitement prédéterminé, et
une pluralité de clients dont le nombre est supérieur ou égal à un nombre de la ou des troisièmes unités de planification,
chaque serveur parmi un ou plusieurs serveurs de la pluralité de serveurs étant configuré pour conserver un état correspondant à une unité différente parmi les deuxièmes unités de planification parmi la ou les deuxièmes unités de planification, et, dans un cas où l'état a été changé, pour notifier à l'unité différente parmi les deuxièmes unités de planification correspondant à l'état des informations indiquant que l'état a été changé, et
chaque client parmi un ou plusieurs clients de la pluralité de clients étant configuré pour notifier à une unité différente parmi les troisièmes unités de planification parmi la ou les troisièmes unités de planification des informations de commande servant à commander l'exécution d'un traitement correspondant à l'unité différente parmi les troisièmes unités de planification ; ou
la ou les troisièmes unités de planification étant situées dans une hiérarchie immédiatement inférieure à celle de la première unité de planification, et
la ou les troisièmes unités de planification étant en outre mises en place, et
la ou chacune des troisièmes unités de planification étant configurée pour effectuer un traitement en vue de la planification de l'action, le traitement étant différent du traitement prédéterminé, et
pour la deuxième ou chacune des deuxièmes unités de planification, dans un cas où un état correspondant à une des deuxièmes unités de planification a été changé, la première unité de planification étant en outre configurée pour délivrer, à une unité de stockage, des informations indiquant que l'état correspondant à l'unité considérée parmi les deuxièmes unités de planification a été changé et
des informations d'historique concernant des changements d'états d'une pluralité d'unités de planification qui comprend la première unité de planification étant affichées sur une unité d'affichage d'après les informations indiquant que l'état a été changé qui sont conservées dans l'unité de stockage.

14. Procédé de traitement d'informations **caractérisé en ce qu'**il comporte les étapes consistant à :
faire effectuer par un processeur, à un niveau inférieur dans une hiérarchie, un traitement prédéterminé en vue de la planification d'une action de l'appareil de traitement d'informations tout en changeant un état de la planification entre une pluralité de types d'états prédéterminés de la planification ; et
dans un cas où l'état a été changé, notifier à une deuxième unité de planification à un niveau supérieur dans la hiérarchie, qui est plus haut que le niveau inférieur, des informations indiquant que l'état a été changé,
la pluralité de types d'états prédéterminés comprenant une pluralité de types d'états indiquant qu'une exécution normale du traitement prédéterminé est en cours.

15. Programme destiné à faire fonctionner un ordinateur comme une première unité de planification à un niveau inférieur dans une hiérarchie, configurée pour effectuer un traitement prédéterminé en vue de la planification d'une action d'un appareil de traitement d'informations tout en changeant un état de la première unité de planification entre une pluralité de types d'états prédéterminés de la première unité de planification,
dans un cas où l'état a été changé, la première unité de planification étant configurée pour notifier à une deuxième unité de planification à un niveau supérieur dans la hiérarchie, qui est plus haut que le niveau inférieur de la première unité de planification, des informations indiquant que l'état a été changé, et
la pluralité de types d'états prédéterminés comprenant une pluralité de types d'états indiquant qu'une exécution normale du traitement prédéterminé est en cours.
